# EUROPÄISCHE PATENTANMELDUNG

(11) **EP 1 852 649 A1**
(43) Veröffentlichungstag der Anmeldung: **07.11.2007**
(21) Anmeldenummer: 07002499.7
(22) Anmeldetag: 06.02.2007
(51) Int. Cl.: F21S 9/03

(54) **Solarbetriebene Mastleuchte**

(30) Priorität: 21.04.2006 WO PCT/EP2006/003681
(71) Anmelder: Müller, Jürgen, 59269 Beckum (DE)
(72) Erfinder: Müller, Jürgen, 59269 Beckum (DE)
(74) Vertreter: Fritz, Edmund Lothar

(57) **Zusammenfassung**

Die vorliegende Erfindung betrifft eine Mastleuchte geeignet für einen netzunabhängigen Betrieb umfassend ein an einem Mast anbringbares Leuchtengehäuse, Solarzellen für die Spannungsversorgung der Leuchtmittel, wenigstens eine Batterie zur Speicherung des von den Solarzellen erzeugten Solarstroms sowie eine Batteriehalterung. Erfindungsgemäß ist vorgesehen, dass wenigstens eine Batterie (13, 20) und/oder die Batteriehalterung (19) im oder am Leuchtengehäuse (9) angeordnet sind und wenigstens eine flache ebene Solarzelle (11 a) im Bereich einer ebenen Fläche am Leuchtengehäuse angeordnet ist. Das Nachrüsten herkömmlicher Leuchten ohne Solarmodule ist durch die erfindungsgemäße Lösung deshalb besonders kostengünstig möglich, weil bereits vorhandene Bauteile der Leuchte am Mast verbleiben können. Man kann beispielsweise eine Gehäusehaube (11) mit daran angebrachten Solarzellen (11 a) auf das Oberteil einer vorhandenen Mastansatzleuchte aufsetzen und dort Befestigen zum Beispiel durch Verschrauben. Der Umrüstsatz umfasst in der Regel nur die Gehäusehaube mit Solarzellen, eine Batterie (13, 20) und/oder eine Batteriehalterung (19) und eine Befestigungseinrichtung zur Anbringung an einem Leuchtenmast (23 a, b), sowie gegebenenfalls außerdem Leuchtmittel (15) und/oder elektrische/elektronische Bauelemente für den Betrieb der Leuchte.

## Beschreibung

Die vorliegende Erfindung betrifft eine solarbetriebene Mastleuchte geeignet für einen netzunabhängigen Betrieb umfassend ein an einem Mast anbringbares Leuchtengehäuse, Solarzellen für die Spannungsversorgung der Leuchtmittel, wenigstens eine Batterie zur Speicherung des von den Solarzellen erzeugten Solarstroms sowie eine Batteriehalterung.

Eine Mastleuchte der vorgenannten Art wird beispielsweise in der US-Patentschrift 5,149,188 beschrieben. Bei dieser bekannten Mastleuchte befindet sich das Leuchtengehäuse am vorderen Ende eines vergleichsweise langen Arms in Form eines horizontalen Auslegers. Die plattenförmigen Module mit den Solarzellen sind in einigem Abstand von dem Leuchtengehäuse mit eigens für diese vorgesehenen Befestigungseinrichtungen ebenfalls an diesem Arm montiert. Dieser Arm bildet wiederum mit einem vertikalen U-Profil und einer schräg verlaufenden Stütze eine Leuchteneinheit, die an einem vertikalen Masten angebracht wird, wobei der Arm und die schräg verlaufende Stütze jeweils mit dem U-Profil verschweißt sind. Die Batterien für die Speicherung der von den Solarzellen erzeugten Energie befinden sich in einem eigenen quaderförmigen Gehäuse, welches angebrachte Platten mit Schlüssellöchern aufweist und in bolzenartige Befestigungselemente eingehängt werden kann, die sich an dem U-Profil befinden. Bei einer Mastleuchte dieser Art ist die aus dem Leuchtengehäuse, dem horizontalen Ausleger, der schräg verlaufenden Stütze sowie dem U-Profil gebildete Einheit recht großvolumig. Da es sich bei dem Arm, der Stütze und dem U-Profil um Bauteile aus Metall handelt, weist die Einheit auch ein hohes Gewicht auf. Bei der Montage an einen bereits vorhandenen Leuchtenmasten sind entsprechende Hilfsmittel notwendig und die Handhabung der großen schweren Einheit ist entsprechend aufwendig. Die Solarmodule sind ebenfalls vergleichsweise große Platten, deren Unterbringung in oder an dem Leuchtengehäuse schon aus diesem Grunde technisch nicht möglich ist. Die Batteriehalterung ist weit von dem Leuchtengehäuse entfernt, so dass entsprechend lange Kabel für die Stromversorgung der Leuchtmittel durch den Arm oder die Stütze bis zum Leuchtengehäuse gezogen werden müssen. Eine Umrüstung einer vorhandenen Mastleuchte ohne Solarmodul zur Solarleuchte ist bei dieser bekannten Leuchte nicht vorgesehen und auch nicht mit vertretbarem Aufwand in technisch sinnvoller Weise lösbar.

In der DE 103 36 543 A1 ist eine Solarstromanlage beschrieben, die an einem Mast befestigt wird. Der Leuchtenkörper ist hier als Hohlkörper in Form einer Halbkugel ausgeführt, in den die Solarkollektoren integriert sind. Die Batterien sind ebenfalls in diese Halbkugelform integriert, wobei eine Batterieschicht aus formbaren und leichtgewichtigen Lithium-Akkumulatoren als Batterie dient. Diese Lösung soll eine Solarleuchte mit ästhetisch besonders ansprechender Formgebung schaffen. Es sind jedoch bei dieser bekannten Leuchte spezielle formbare Akkumulatoren nötig, um die Batterien in die Halbkugelform zu integrieren, so dass diese Lösung kostenaufwändig in der Herstellung ist. Außerdem ist man bei dieser Vorgehensweise auf eine jeweils spezifische Gehäuseform des Leuchtengehäuses festgelegt und eine Umrüstung vorhandener Mastleuchten mit einer anderen vorgegebenen Form zu Solarleuchten ist technisch nicht ohne weiteres möglich und wird auch in der Druckschrift nicht angesprochen. Auch können hier im Handel erhältliche Solarzellen, die in der Regel flach, plattenförmig und eben sind, nicht verwendet werden, da die Solarzellen an die Krümmung der Halbkugel des Gehäuses angepasst sein müssen. Die bekannte Leuchte stellt somit eine aufwändige Sonderkonstruktion da.

Die Aufgabe der vorliegenden Erfindung besteht darin, eine Mastleuchte der eingangs genannten Gattung zur Verfügung zu stellen, die die Verwendung handelsüblicher Batterien und Solarzellen ermöglicht und es zulässt, mit vergleichsweise geringem Aufwand eine kompakte Einheit umfassend Leuchtengehäuse, Batterie, Batteriehalterung, Leuchtmittel und Solarzellen an einem für die Leuchte vorgesehenen Mast oder auch nachträglich an einer herkömmlichen Mastleuchte anzubringen.

Die Lösung dieser Aufgabe liefert eine Mastleuchte der eingangs genannten Art mit den kennzeichnenden Merkmalen des Hauptsanspruchs.

Erfindungsgemäß ist vorgesehen, dass wenigstens eine Batterie und/oder die Batteriehalterung im oder am Leuchtengehäuse angeordnet sind und wenigstens eine flache ebene Solarzelle im Bereich einer ebenen Fläche am Leuchtengehäuse angeordnet ist. Die erfindungsgemäße Lösung ermöglicht es zum einen, mit einem vergleichsweise geringen Montageaufwand eine fertige kompakte Baueinheit, die alle funktionswesentlichen Bauelemente enthält und weder zu groß noch zu schwer ist, an einem Leuchtenmast anzubringen. Diese Baueinheit enthält in kompakter Form die Batterie, gegebenenfalls die Batteriehalterung, die Leuchtmittel und die Solarzellen. Diese Baueinheit kann im Prinzip in einem Arbeitsgang und platzsparend an dem Leuchtenmast angebracht werden und es ist nicht notwendig, die Solarzellen oder die Batterie gesondert zu montieren. Die Solarzellen sind eben und flach und befinden sich an nicht gekrümmten Flächen des Gehäuses, so dass handelsübliche Solarzellen verwendet werden können. Auch handelsübliche Batterien können zum Einsatz kommen.

Besonders vorteilhaft ist es, wenn die Solarzellen an oder in einer Gehäusehaube angeordnet sind, die ein oberer Teil des Leuchtengehäuses ist. Man kann dann beispielsweise auch eine solche Gehäusehaube auf eine vorhandene Mastleuchte aufsetzen. Es ist also in besonders einfacher Weise eine Umrüstung einer herkömmlichen Leuchte auf eine erfindungsgemäße Solarleuchte möglich.

Das Nachrüsten herkömmlicher Leuchten ohne Solarmodule ist durch die erfindungsgemäße Lösung deshalb besonders kostengünstig möglich, weil bereits vorhandene Bauteile der Leuchte am Mast verbleiben können. Man kann beispielsweise eine Gehäusehaube der zuvor beschriebenen Art mit daran angebrachten Solarzellen auf das Oberteil einer vorhandenen Mastansatzleuchte aufsetzen und dort befestigen zum Beispiel durch Verschrauben. Der Umrüstsatz umfasst in der Regel nur die Gehäusehaube mit Solarzellen, eine Batterie und/oder eine Batteriehalterung und eine Befestigungseinrichtung zur Anbringung an einem Leuchtenmast, sowie gegebenenfalls außerdem Leuchtmittel und/oder elektrische/elektronische Bauelemente für den Betrieb der Leuchte. In der Regel ist noch eine Bohrung für ein Anschlusskabel notwendig, welches dann mit einem elektronischen oder elektrischen Bauelement in dem Umrüstsatz verbunden wird.

Ein Umrüstsatz der in den Ansprüchen 14 bis 16 genannten Art ist ebenfalls Gegenstand der vorliegenden Erfindung.

Eine bevorzugte Variante der erfindungsgemäßen Aufgabenlösung sieht vor, dass die Solarzellen oberseitig und/oder seitlich an der Gehäusehaube angeordnet sind. Die Solarzellen können beispielsweise in die vorzugsweise aus Kunststoff bestehende Gehäusehaube eingeschweißt sein. Im Rahmen der vorliegenden Erfindung eignen sich besonders flache plattenförmige Solarzellen mit geringer Bauhöhe (Materialstärke). In letzter Zeit sind quasi papierdünne kristalline Siliziumzellen bekannt geworden, die für diese Variante der Erfindung besonders geeignet sind. Unter anderem wurden vom Fraunhofer Institut solare Dünnschichtzellen mit der so genannten LFC-Technik und einem Wirkungsgrad von beispielsweise 20 % entwickelt, die bei geringer Lichteinwirkung eine sehr hohe Effizienz an Ladespannung für die Versorgung der Akkumulatoren erzielen. Diese Solarzellen können erfindungsgemäß kombiniert werden mit Akkumulatoren, die eine hohe Speicherkapazität aufweisen. Insbesondere sind so genannte Gelakkus für die erfindungsgemäßen Zwecke geeignet.

Vorzugsweise ist weiterhin vorgesehen, dass ein Batteriemodul mit wenigstens einer Batterie im Inneren des Leuchtengehäuses in einem hinteren dem Leuchtenmast zugewandten Bereich angeordnet ist. Dabei können eine oder mehrere Batterien auf oder an einer Batteriehalterung angeordnet sind, die mittels einer Befestigungseinrichtung an dem Leuchtenmast anbringbar ist. Dadurch, dass bei dieser Variante der Erfindung die Batteriehalterung direkt mit dem Leuchtenmast verbunden wird, wird das Gewicht der Batterien auf den Mast übertragen und das Leuchtengehäuse wird entlastet.

Gemäß einer Weiterbildung der erfindungsgemäßen Aufgabenlösung ist vorgesehen, dass das Leuchtengehäuse mindestens einen Stutzen in einem rückwärtigen Bereich aufweist, der geeignet ist, einen Abschnitt eines Rohrmasten aufzunehmen. Man kann in diesen Rohrstutzen einen Mast mit den üblichen Abmessungen einführen. Besonders bevorzugt ist es, dass zwei solcher Stutzen am Leuchtengehäuse vorgesehen sind, deren Achsen miteinander einen Winkel einnehmen, so dass man eine Leuchte der erfindungsgemäßen Art an verschiedenen gängigen Masttypen mit den üblichen Dimensionen anbringen kann, insbesondere an vertikalen Masten oder an Peitschenmasten, bei denen der für die Anbringung des Leuchtengehäuses vorgesehene Abschnitt annähernd horizontal verläuft.

Eine mögliche bevorzugte Variante der Erfindung sieht vor, dass die Batteriehalterung innerhalb eines gewissen Bereichs gegenüber der Befestigungseinrichtung um eine horizontale Achse schwenkbar ist. Dies hat den Vorteil, dass man bei der Montage zum Beispiel an einem Peitschenmasten eine zur Horizontalen meist um einige Grad geneigte Lage durch Schwenken ausgleichen kann, so dass die Batterien dann eine horizontale Position einnehmen.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine erfindungsgemäße Mastaufsatzleuchte in schematisch vereinfachter Darstellung im vertikalen Querschnitt;
Figur 2 eine entsprechende schematisch vereinfachte Darstellung der erfindungsgemäßen Mastaufsatzleuchte von Figur 1 im Längsschnitt;
Figur 3 eine schematisch vereinfachte Detailansicht zur Erläuterung der Verbindung der Batteriehalterung der Mastaufsatzleuchte mit dem Leuchtenmasten in der Draufsicht;
Figur 4 eine weitere schematisch vereinfachte Detailansicht einer alternativen Ausführungsvariante (Vorderansicht) im Befestigungsbereich der Batteriehalterung bei Anbringung an einem Peitschenmast;
Figur 5 eine weitere schematisch vereinfachte Ansicht des Befestigungsbereichs der Batteriehalterung an einem Peitschenmasten als Seitenansicht;
Figur 6 ein Diagramm betreffend ein Schaltbild für eine erfindungsgemäße Mastaufsatzleuchte.

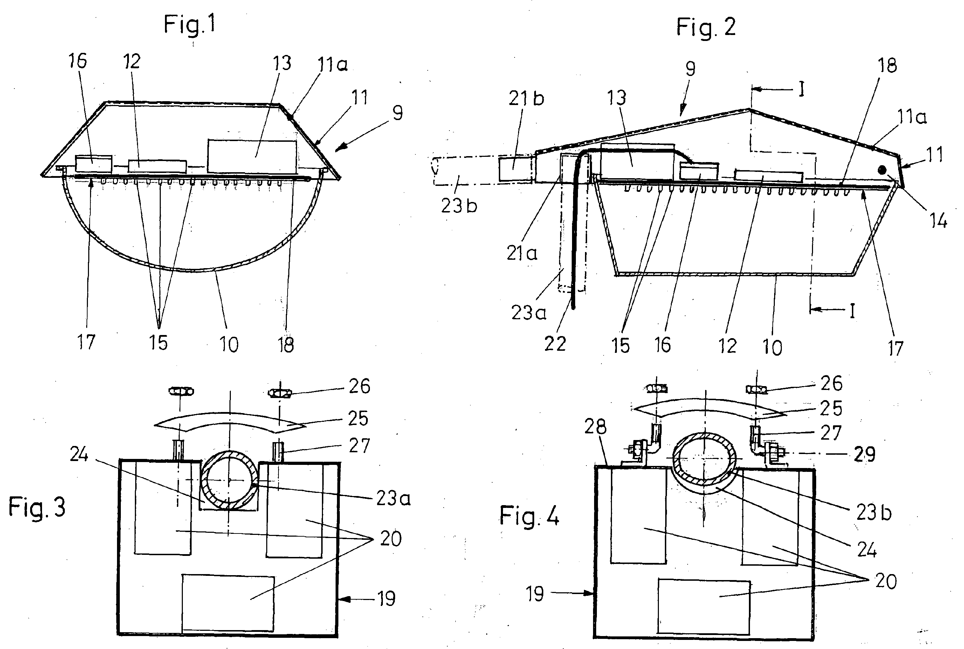

Zunächst wird auf die Figur 1 Bezug genommen. Die Darstellung zeigt eine beispielhafte erfindungsgemäße Mastaufsatzleuchte im schematisch vereinfachten Querschnitt. Die Leuchte umfasst ein oberes Gehäuse in Form einer Haube 11, welches beispielsweise aus einem UV-beständigen Kunststoff, z.B. PMMA besteht. Die vorzugsweise sehr dünnen Solarzellen können beispielsweise in den Kunststoff des Gehäuses der Haube eingeschweißt sein. Im Rahmen der Erfindung besonders geeignet sind dabei papierdünne kristalline Siliziumzellen, die oberseitig und/oder seitlich an dem Gehäuse angeordnet sein können.

Die Anschlusskabel der einzelnen Bauelemente, die sich innerhalb des Gehäuses 11 befinden, können über eine Bohrung in das Innere der Leuchte zu den Klemmen an die Elektronikbox 12 geführt werden. Zu diesen Bauelementen zählt ein Dämmerungsschalter 14 (DLR) als Lichtwiderstand, der dazu dient, einen Tag/Nachtbetrieb zu gewährleisten. Weiterhin ist eine Batteriemodul 13 im Leuchteninneren eingebaut. Dieses umfasst beispielsweise zwei Trockenbatterien mit 12 V/27 Ah als Energiespeicher, eine Konsole und eine Masthalterung und wird später noch unter Bezugnahme auf die Figuren 3 bis 5 näher erläutert.

Innerhalb des Gehäuses ist weiterhin eine etwa horizontal angeordnete Montageplatte 18 eingebaut, auf der oberseitig die Elektronikbox 12 montiert ist. Unterhalb werden an der Montageplatte 18 die Leuchtmittel 15 befestigt. Dabei sind in der Regel mehrere Reihen von LEDs vorgesehen in Form von Leuchtdiodenleisten. Die Anzahl der erforderlichen LEDs hängt natürlich ab von der gewünschten Beleuchtungsstärke und dem jeweiligen Leuchtdiodentyp. Bei einer als Straßenleuchte verwendbaren Mastaufsatzleuchte der erfindungsgemäßen Art können beispielsweise 10 bis 12 Reihen mit jeweils einer größeren Anzahl LEDs pro Reihe vorgesehen sein, beispielsweise 50 bis 80 Stück pro Reihe. Insgesamt ist für diesen spezifischen Anwendungsfall eine Stückzahl von ca. 720 bis ca. 950 LEDs empfehlenswert, um die geforderte Beleuchtungsstärke zu erzielen, mit beispielsweise 3,6 V und 20 mA pro Leuchtdiode.

Es können beispielsweise jeweils drei Dioden in Reihe geschaltet werden mit einem diesen zugeordneten Widerstand, um die Leuchtdioden bei einer gesamten Stromaufnahme von zum Beispiel 20 mA pro LED-Reihe an 12 V anliegend energiesparend zu versorgen.

Die Leuchte umfasst weiterhin einen Spiegelreflektor 17 für die Lichtlenkung, der unterhalb der Montageplatte angeordnet ist. Dieser Spiegelreflektor kann gemäß einer Variante der Erfindung auch entfallen, wobei dann die LED-Leisten so angeordnet werden können, dass sie einen Halbbogen bilden. Vorteilhaft ist es, wenn man dabei einen Lichtkegel mit einem Abstrahlwinkel von maximal 60 ° zum Boden hin im Straßenverlauf erzielt.

Außerdem ist ein Netztrafo 16 vorgesehen, der in dem Ausführungsbeispiel nach Figur 1 oberhalb der Montageplatte 18 in dem Gehäuse untergebracht ist. Der Netztrafo 16 ist beispielsweise für eine Eingangsspannung von 230 V AC vorgesehen und hat eine Ausgangsspannung von 12 V DC und eine Leistung von 120 VA. Der Lichtaustritt erfolgt durch das Leuchtenglas 10 hindurch, welches sich unterhalb der Haube 11 befindet, so dass ein Lichtaustritt nach unten und zu den Seiten hin erfolgt. Das Leuchtenglas besteht beispielsweise aus Schutzglas nach VDE 0100 mit der IP Klasse 68 und ist wasserdicht.

Nachfolgend wird nun auf Figur 2 Bezug genommen, die einen schematisch vereinfachten Längsschnitt durch die erfindungsgemäße Mastaufsatzleuchte zeigt. Diese ist so konzipiert, dass sie auch nachträglich an vorhandene Leuchtenmasten oder Mastleuchten unterschiedlicher Typen angebaut werden kann. Dazu sind in dem Ausführungsbeispiel zwei Rohrstutzen 21 A und 21 B im hinteren Endbereich des Gehäuses angeordnet, von denen der erste 21 A eine Einführung eines im montierten Zustand vertikalen Mastrohrs quasi von unter her in das Aufsatzgehäuse der erfindungsgemäßen Leuchte zulässt. Während der zweite Stutzen 21 B im rechten Winkel dazu angeordnet ist und quasi von dem Gehäuse waagrecht nach hinten abgeht, so dass dieser zweite Stutzen 21 B eine Rohrhalterung für Peitschenmasten bildet. Die Kabelzuführung erfolgt dabei jeweils in das Gehäuseinnere durch den jeweils benötigten Stutzen, wobei diese Kabelzuführung 22 in Figur 2 für die Alternative mit Nutzung des ersten Stutzens 21 A in ihrem Verlauf schematisch angedeutet ist.

In Figur 2 erkennt man weiterhin die auf der Montageplatte 18 angeordneten Bauelemente, die bereits zuvor genannt wurden, nämlich das Batteriemodul 13, den Netztrafo 16, die Elektronikbox 12, den im vorderen Bereich im Inneren des Gehäuses angeordneten Dämmerungsschalter 14. Außerdem sieht man die unterhalb des Spiegelreflektors 17 angeordneten Leuchtmittel 15 mit den einzelnen LED-Reihen sowie die Form des Leuchtenglases 10 im Längsschnitt. Ebenfalls ersichtlich ist die Längsschnittform des Gehäuses mit der oberseitigen Haube 11 des Gehäuses, in die die dünnen Solarzellen eingelassen, insbesondere eingeschweißt sind.

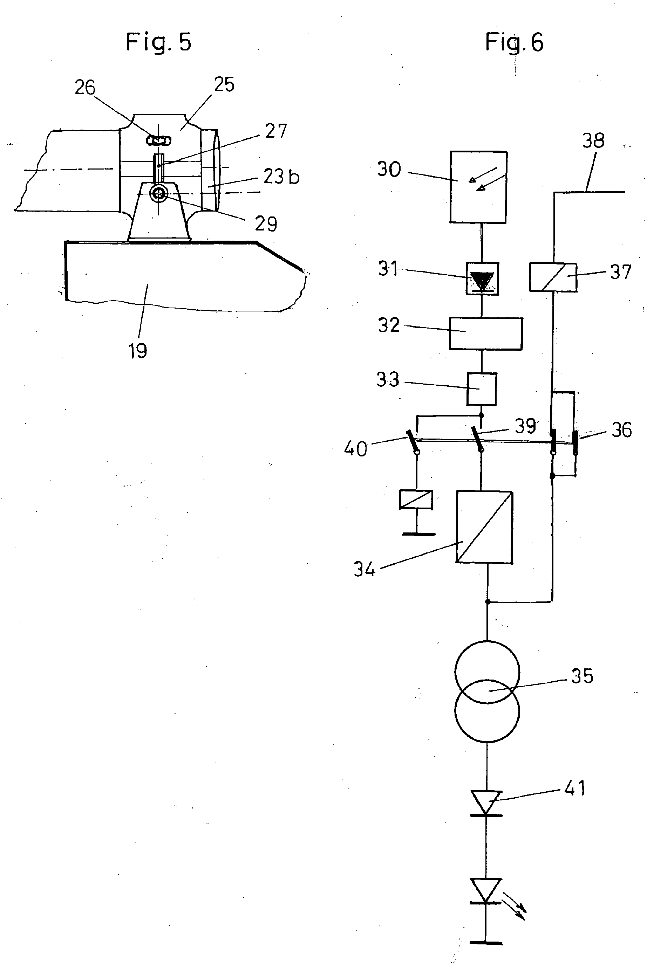

Nachfolgend wird nun unter Bezugnahme auf die Figur 3 die Befestigung einer erfindungsgemäßen Mastaufsatzleuchte an einem vertikalen Standrohr eines Leuchtenmastes 23 a näher erläutert. Es ist die Befestigung an einem handelsüblichen Leuchtenmast mit Standrohr oder auch an Peitschenmasten (siehe Figur 4 und 5) mit jeweils den üblichen Abmessungen möglich, wobei die Durchmesser der Rohre der Masten üblicherweise im Bereich von beispielsweise etwa 60 mm bis 76 mm liegen. Die Höhe der Leuchtenmasten liegt üblicherweise etwa im Bereich von beispielsweise 4 m bis 7,5 m. Diese weit verbreiteten Typen von Leuchtenmasten können mit einer erfindungsgemäßen Mastaufsatzleuchte nachgerüstet werden.

Wie aus Figur 3 ersichtlich ist, ist eine Batteriehalterung 19 vorgesehen, die drei Batterien 20 aufnimmt. Dabei handelt es sich vorzugsweise um so genannte Gelakkus, die in einem Block zusammengefasst sein können und beispielsweise eine Kapazität von ca. 50 Ah haben. Diese Batteriehalterung kann erfindungsgemäß über eine Befestigungseinrichtung unmittelbar mit dem Leuchtenmasten 23 a verbunden werden, was den Vorteil hat, dass dadurch der Leuchtenkörper von dem vergleichsweise hohen Gewicht der Batterien 20 entlastet wird. Die Batteriehalterung kann wie man sieht rückseitig eine Ausnehmung 24 aufweisen, die den Leuchtenmasten 23 a aufnimmt.

Eine alternative Art der Anbringung der Batteriehalterung 19 an einem annähernd horizontal verlaufenden Abschnitt eines Leuchtenmasten 23 b (Peitschenmast) wird nachfolgend unter Bezugnahme auf die schematisch vereinfachte Darstellung gemäß Figur 4 erläutert. Im Gegensatz zu Figur 3 verläuft hier also der im Schnitt dargestellte Abschnitt 23 b des Leuchtenmasten annähernd horizontal und die am Mast zu befestigende Batteriehalterung 19 hängt quasi unterhalb des Masten. Die Betrachtungsrichtung in Figur 4 ist also etwa um 90 ° versetzt zu derjenigen in Figur 3, d.h. Figur 4 zeigt eine Ansicht von vorn, während Figur 3 eine Draufsicht zeigt.

Die Befestigungseinrichtung in Figur 4 umfasst eine Mastschelle 25 und zwei Befestigungsmutter 26, je nach Bedarf beispielsweise Gewinde- oder Flügelmuttern, die jeweils auf Gewindestangen 27 aufschraubbar sind, welche sich an einem rückwärtigen Abschnitt 28 der Batteriehalterung befinden. Die Mastschelle 25 umfasst den Leuchtenmasten 23 b. Nach Anbringung der Batteriehalterung 19 am Leuchtenmasten 23 b wird das Gewicht der Batterien auf den Masten übertragen.

Figur 5 zeigt ein ähnliches Ausführungsbeispiel der Erfindung wie in Figur 4 betreffend die Befestigung an einem Peitschenmasten. Die Darstellung ist eine ebenfalls schematisch vereinfachte Seitenansicht der an dem Leuchtenmasten 23 b mittels Mastschelle 25 und Befestigungsmuttern 26 angebrachten Batteriehalterung 19. Bei dem hier nur teilweise dargestellten Leuchtenmasten 23 b handelt es sich in dem Ausführungsbeispiel um einen Peitschenmasten, bei dem das Mastrohr leuchtenseitig in einem flachen Winkel zur Horizontalen endet. Die Batteriehalterung 19 ist gegenüber der Mastschelle 25 schwenkbar um eine horizontale Achse 29, wodurch es möglich ist, die Batterien in jede horizontale Lage zu versetzen. Die Gewindestangen 27 haben eine Winkelform, so dass, wie in der Zeichnung erkennbar ist, ein Abschnitt etwa in Richtung der Schwenkachse 29 verläuft und ein weiterer Abschnitt, an dem sich jeweils das Gewinde befindet, etwa rechtwinklig dazu. Im Bereich des Gewindeabschnitts der Gewindestangen 27 werden die Befestigungsmuttern 26 aufgeschraubt, wodurch die Mastschelle 25, die den Endabschnitt des Mastrohrs des Leuchtenmasten 23 b umgreift, fixiert wird. Aufgrund dieser Schwenkbarkeit im Bereich der Verbindung zwischen Batteriehalterung 19 und Mastschelle 25 besteht die Möglichkeit, die Batteriehalterung mit den Batterien auch bei von der Horizontalen abweichender Ausrichtung des Endabschnitts horizontal auszurichten. Die Peitschen-Lichtmasten haben zum Beispiel einen Auslegerwinkel von 12 ° zur Horizontalen.

Figur 6 zeigt ein beispielhaftes Schaltbild für eine erfindungsgemäße Mastaufsatzleuchte mit Solarbetrieb. Tagsüber erfolgt die Aufladung über die Solarzellen 30 und der Ladestrom fließt über Sperrdioden 31 zu den Akkus 32. Die Entladung erfolgt über den Laderegler 33 als Tiefenentladung, wobei die Schaltung mit einem Wechselrichter 34 arbeitet, was den Vorteil hat, dass von dem Akku 32 jeweils nur ein geringer Strom entnommen wird. In Verbindung mit dem verwendeten Transformator 35 kann man zum Beispiel ein Übersetzungsverhältnis zwischen der Stromaufnahme vom Akku 32 und der Stromabgabe zur Platine von 1:10 erreichen.

Fällt die Batteriespannung ab, schließt der Schütz 37 den Kontakt 36 und die Spannungsversorgung erfolgt über den Netzbetrieb 38. Bei Solarbetrieb wird der Kontakt 36 geöffnet und die Kontakte 39, 40 werden geschlossen, so dass 12 V Gleichspannung an dem Trapezwechselrichter 34 anliegt, wodurch eine 220 V Wechselspannung den Transformator 35 aktiviert. Dieser wandelt in eine 12 V Wechselspannung um, die der nachgeschaltete Gleichrichter 41 in eine 12 V Gleichspannung umwandelt zur Speisung der LEDs.
Bei Verwendung einer Schaltung der vorbeschriebenen Art lässt sich beispielsweise bei einer Akkukapazität von 34 Ah und einer 12-stündigen Leistungsentnahme mit jeweils stündlich 0,36 A (12h x 0,36 A = 4,32 Ah) ein Entnahmestrom von nur etwa jeweils 12,7 % pro Nacht erzielen.

### Bezugszeichenliste

- 9: Leuchtengehäuse
- 10: Leuchtenglas
- 11: Haube des Gehäuses
- 11 a: Solarzellen
- 12: Elektronikbox
- 13: Batteriemodul
- 14: Dämmerungsschalter
- 15: Leuchtmittel
- 16: Netztrafo
- 17: Spiegelreflektor
- 18: Montageplatte
- 19: Batteriehalterung
- 20: Batterien
- 21 A: erster Stutzen
- 21 B: zweiter Stutzen
- 22: Kabelzuführung
- 23 a: Leuchtenmast (vertikal)
- 23 b: Leuchtenmast (horizontal)
- 24: Ausnehmung
- 25: Mastschelle
- 26: Befestigungsmuttern
- 27: Gewindestangen
- 28: rückwärtiger Abschnitt der Batteriehalterung
- 29: Schwenkachse
- 30: Solarzellen
- 31: Sperrdioden
- 32: Akkus
- 33: Laderegler
- 34: Wechselrichter
- 35: Transformator
- 36: Kontakt
- 37: Schütz
- 38: Netzbetrieb
- 39: Kontakt
- 40: Kontakt
- 41: Gleichrichter

## Patentansprüche

1. Mastleuchte geeignet für einen netzunabhängigen Betrieb umfassend ein an einem Mast anbringbares Leuchtengehäuse, Solarzellen für die Spannungsversorgung der Leuchtmittel, wenigstens eine Batterie zur Speicherung des von den Solarzellen erzeugten Solarstroms sowie eine Batteriehalterung, **dadurch gekennzeichnet, dass** wenigstens eine Batterie (13, 20) und/oder die Batteriehalterung (19) im oder am Leuchtengehäuse (9) angeordnet sind und wenigstens eine flache ebene Solarzelle (11 a) im Bereich einer ebenen Fläche am Leuchtengehäuse angeordnet ist.

2. Mastleuchte nach Anspruch 1, **dadurch gekennzeichnet, dass** die Solarzellen (11 a) an oder in einer Gehäusehaube (11) angeordnet sind, die ein oberer Teil des Leuchtengehäuses (9) ist.

3. Mastleuchte nach Anspruch 2 **dadurch gekennzeichnet, dass** die Solarzellen (11 a) oberseitig und/oder seitlich an der Gehäusehaube (11) angeordnet sind.

4. Mastleuchte nach Anspruch 2 oder 3, **dadurch gekennzeichnet, dass** die Solarzellen in die vorzugsweise aus Kunststoff bestehende Gehäusehaube (11) eingeschweißt sind.

5. Mastleuchte nach einem der Ansprüche 1 bis 4, **dadurch gekennzeichnet, dass** ein Batteriemodul (13) mit wenigstens einer Batterie im Inneren des Leuchtengehäuses (9) in einem hinteren dem Leuchtenmast (23 a, b) zugewandten Bereich angeordnet ist.

6. Mastleuchte nach Anspruch 1 oder 5, **dadurch gekennzeichnet, dass** eine oder mehrere Batterien (20) auf oder an einer Batteriehalterung (19) angeordnet sind, die mittels einer Befestigungseinrichtung (25, 26, 27) an dem Leuchtenmast (23 a, b) anbringbar ist.

7. Mastleuchte nach Anspruch 6, **dadurch gekennzeichnet, dass** die Befestigungseinrichtung eine Mastschelle (25) umfasst, die den Leuchtenmast (23 a, b) teilweise umgreifend eine klemmende Anbringung der Batteriehalterung über Befestigungselemente (26, 27) an dem Leuchtenmasten (23 a, b) ermöglicht.

8. Mastleuchte nach Anspruch 6 oder 7, **dadurch gekennzeichnet, dass** die Batteriehalterung eine rückwärtige Ausnehmung (24) aufweist, die den Leuchtenmasten (23 a, b) teilweise aufnimmt.

9. Mastleuchte nach einem der Ansprüche 7 oder 8, **dadurch gekennzeichnet, dass** Mastschelle (25) und Batteriehalterung (19) bei der Anbringung an dem Leuchtenmasten (23 a, b) miteinander verschraubt werden.

10. Mastleuchte nach einem der Ansprüche 6 bis 9, **dadurch gekennzeichnet, dass** die Batteriehalterung (19) innerhalb eines Bereichs gegenüber der Befestigungseinrichtung um eine horizontale Achse schwenkbar ist.

11. Mastleuchte nach einem der Ansprüche 6 bis 10, **dadurch gekennzeichnet, dass** an einem Abschnitt (28) der Batteriehalterung (19) Gewindestangen (27) angeordnet sind, auf die Muttern (26) zur Befestigung aufgeschraubt werden.

12. Mastleuchte nach einem der Ansprüche 1 bis 11, **dadurch gekennzeichnet, dass** das Leuchtengehäuse mindestens einen Stutzen (21 A, 21 B) in einem rückwärtigen Bereich aufweist, der geeignet ist, einen Abschnitt eines Rohrmasten aufzunehmen.

13. Mastleuchte nach Anspruch 12, **dadurch gekennzeichnet, dass** das Leuchtengehäuse mindestens zwei verschiedene Stutzen (21 A, 21 B) aufweist, deren Achsen einen Winkel miteinander einschließen, von denen jeder jeweils geeignet ist, jeweils einen Abschnitt eines Rohrmasten aufzunehmen.

14. Umrüstsatz für die Schaffung einer Mastleuchte nach einem der Ansprüche 1 bis 13 durch Umrüstung einer vorhandenen herkömmlichen Mastleuchte, **dadurch gekennzeichnet, dass** dieser wenigstens eine Gehäusehaube (11) mit Solarzellen (11 a) umfasst, eine Batterie und/oder eine Batteriehalterung und eine Befestigungseinrichtung zur Anbringung an einem Leuchtenmast oder an einer vorhandenen Mastleuchte.

15. Umrüstsatz nach Anspruch 14, **dadurch gekennzeichnet, dass** dieser weiterhin Leuchtmittel (15) und/oder elektrische/elektronische Bauelemente (14, 16, 22) für den Betrieb der Leuchte umfasst.

16. Umrüstsatz nach Anspruch 14 oder 15, **gekennzeichnet durch** die Merkmale wenigstens eines der Ansprüche 1 bis 13.
